# EUROPÄISCHE PATENTSCHRIFT

(11) **EP 3 009 267 B1**
(45) Veröffentlichungstag und Bekanntmachung des Hinweises auf die Patenterteilung: **18.03.2020**
(21) Anmeldenummer: 15189581.0
(22) Anmeldetag: 13.10.2015
(51) Int. Cl.: B41F 33/00, B41F 33/16, B42C 19/06, B65H 43/00

(54) **VERFAHREN ZUR HERSTELLUNG VON DRUCKPRODUKTEN**
METHOD FOR MANUFACTURING PRINTED PRODUCTS
PROCEDE DE FABRICATION DE PRODUITS D'IMPRESSION

(30) Priorität: 16.10.2014 CH 15892014
(43) Veröffentlichungstag der Anmeldung: 20.04.2016
(73) Patentinhaber: Müller Martini Holding AG, 6052 Hergiswil (CH)
(72) Erfinder: Bracher, Markus, 6264 Pfaffnau (CH); Lutziger, Daniel, 5413 Birmenstorf (CH)

(56) Entgegenhaltungen:
- EP-A1- 1 733 988
- EP-A1- 1 777 078
- EP-A1- 2 636 536
- WO-A1-2012/048435
- US-A1- 2007 179 037

## Beschreibung

Die vorliegende Erfindung betrifft ein Verfahren zur Herstellung von Druckprodukten auf einer mit einer Digitaldruckmaschine und mindestens einer stromab der Digitaldruckmaschine angeordneten Weiterverarbeitungsmaschine ausgestatteten Fertigungsanlage. Dabei erfolgt die Herstellung der Druckprodukte nach Fertigungsaufträgen, zu deren Abarbeitung die Digitaldruckmaschine eine in einer Förderrichtung mit einer ersten Bahngeschwindigkeit transportierte Bedruckstoffbahn mit Druckbildern und prozesstechnischen Elementen bedruckt. Die mindestens eine Weiterverarbeitungsmaschine verarbeitet die Bedruckstoffbahn zu Druckprodukten weiter, wobei die Fertigungsanlage umgerüstet wird, wenn mit einem nachfolgenden Fertigungsauftrag gegenüber einem vorangehenden Fertigungsauftrag unterschiedliche Druckprodukte hergestellt werden sollen. Das Umrüsten umfasst ein während einer Umrüstzeit erfolgendes Verstellen mindestens einer der Weiterverarbeitungsmaschinen, wobei die Bedruckstoffbahn während des Umrüstens weiter durch die Digitaldruckmaschine transportiert wird.

Gegenüber herkömmlicher Druckmaschinen bieten Digitaldruckmaschinen für Kleinauflagen von Druckprodukten wie Bücher, Zeitschriften, Zeitungen u. ä. ideale Voraussetzungen. Prozesse wie die Herstellung von Druckplatten, die Verwendung von Druckwalzen und die Rüstkosten entfallen komplett, da beim Digitaldruck die Buchdaten direkt zum Drucken genutzt werden können. Damit diese Vorteile auch in einer aus einer Digitaldruckmaschine und zumindest einer Weiterverarbeitungsmaschine gebildeten Fertigungsanlage genutzt werden können, sind bei der Weiterverarbeitung neue, innovative Lösungen gefragt.

Eine Digitaldruckmaschine ist üblicherweise in der Lage eine bis ca. 1 Meter breite endlose Papierbahn mit bis ca. 4 m/s zu bedrucken. Ausser den Druckbildern werden dabei auch prozesstechnische Elemente wie Druck- und/oder Schnittmarken, Barcodes zur Erkennung einzelner Seiten etc. aufgedruckt. Die Papierbahn wird sequentiell, d.h. in einem Durchlauf und in der Reihenfolge bedruckt, in der die Seiten nach allen Weiterverarbeitungsprozessen richtig im zukünftigen Produkt angeordnet sein sollen. Dies ermöglicht eine effiziente und schnelle Herstellung von Druckprodukten. Durch dieses sequenzielle Drucken ist es möglich kleine Auflagen unmittelbar aufeinanderfolgend herzustellen. Bei einer Auflagengrösse von einem einzelnen Druckprodukt werden nacheinander Produkte mit unterschiedlichem Inhalt gedruckt. Wenn sich dabei auch andere Kenngrössen z.B. das Format, Dicke, Höhe, Breite des Druckproduktes verändert, müssen die nachfolgenden Weiterverarbeitungsmaschinen entsprechend verstellt werden. Das Dokument US 2007/179037 A1 offenbart ein Verfahren zur Herstellung von Druckprodukten gemäß dem Oberbegriff des Anspruchs 1.

Aus der EP2492107 A1 ist das Verstellen einer solchen als Fadenheftmaschine ausgebildeten, einzelnen Weiterverarbeitungsmaschine bekannt. In eine zentrale Steuerung wird hier eine vorbestimmte Abfolge für eine taktweise Verarbeitung von Druckprodukten eingegeben. Diese Abfolge wird in der Steuerung prozesstechnisch verarbeitet. Wird dabei festgestellt, dass die zur Verfügung stehende Zeit zum Verstellen der Weiterverarbeitungsmaschine nicht ausreicht, erfolgt daraufhin das Einfügen zumindest eines Leertaktes. Bei einem solchen Leertakt wird kein Druckprodukt weitergefördert, so dass während der Verstellphase eine Lücke im Materialfluss der Weiterverarbeitungsmaschine entsteht, die dann in einer stromabwärts angeordneten weiteren Maschine, z.B. in einer Nähstation erkannt und als Leerstich umgesetzt wird. Zwar ist diese Fadenheftmaschine in der Lage, Druckprodukte unterschiedlichen Formats innerhalb einer einheitlichen Produktion zu verarbeiten, doch das dafür notwendige Verstellen der Weiterverarbeitungsmaschine kann nur in einem Zeitraum erfolgen, der einem Vielfachen eines Leertakts entspricht. Demnach kann die Zeit für dieses Verstellen nicht stufenlos variiert werden.

In der DE102008033184 A1 ist eine Vorrichtung für die Herstellung von Einzelbüchern oder sehr kleinen Auflagen beschrieben, bei der eine als Klebebinder ausgebildete Druckweiterverarbeitungsmaschine mit mindestens einer Digitaldruckmaschine zu einer Fertigungsanlage verbunden ist. Ist aufgrund unterschiedlichen Formats und Ausstattung der zu verarbeitenden Bücher eine Umrüstung der Fertigungsanlage erforderlich, wird beispielsweise der Klebebinder entsprechend verstellt, wozu jeweils mindestens ein Leertakt eingefügt wird. Während des Verstellens wird dabei Makulatur produziert, wobei jeder Leertakt einen Zeitverlust im Fertigungsprozess verursacht.

Der Erfindung liegt die Aufgabe zugrunde, ein Verfahren zur Herstellung von Druckprodukten auf einer mit einer Digitaldruckmaschine und mindestens einer stromab der Digitaldruckmaschine angeordneten Weiterverarbeitungsmaschine ausgestatteten Fertigungsanlage bereitzustellen, bei dem in der Umrüstphase der Fertigungsanlage für aufeinander folgende Fertigungsaufträge, d.h. bei einem Jobwechsel sowohl die Fertigungszeit als auch der Materialverbrauch minimiert werden.

Diese Aufgabe wird durch ein Verfahren nach dem Oberbegriff des Anspruchs 1 gelöst, bei dem zunächst eine Zeitdauer zum Verstellen der Weiterverarbeitungsmaschine der Fertigungsanlage ermittelt wird, welche die längste Verstellzeit erfordert. Die mindestens eine Weiterverarbeitungsmaschine beginnt mit dem Verstellen, sobald das letzte Druckprodukt des vorangehenden Fertigungsauftrags diese Weiterverarbeitungsmaschine verlässt. Daraufhin beginnt die mindestens eine zu verstellende Weiterverarbeitungsmaschine mit der Abarbeitung des nachfolgenden Fertigungsauftrags, sobald nach Beginn des Verstellens die ermittelte Zeitdauer zum Verstellen der Weiterverarbeitungsmaschine, welche die längste Verstellzeit erfordert, verstrichen ist. Dadurch wird sichergestellt, dass sämtliche Komponenten der Fertigungsanlage stromauf der Weiterverarbeitungsmaschine, welche die längste Verstellzeit erfordert, den nachfolgenden Fertigungsauftrag bereits während des Verstellvorgangs dieser Weiterverarbeitungsmaschine bearbeiten und die Bedruckstoffbahn beziehungsweise die Druckprodukte diese Weiterverarbeitungsmaschine gleich nach deren Verstellung erreicht beziehungsweise erreichen. Gegenüber dem Stand der Technik erfolgt damit sowohl eine Einsparung von nicht verwendbarer Bedruckstoffbahn als auch eine Verkürzung der Fertigungszeit.

Bei einer vorteilhaften Weiterbildung bedruckt die Digitaldruckmaschine die Bedruckstoffbahn während des Umrüstens der Fertigungsanlage für die ermittelte Zeitdauer nur mit prozesstechnischen Elementen. Dies führt zu einer Tinteneinsparung, da keine Druckbilder von der Digitaldruckmaschine auf die Bedruckstoffbahn aufgetragen werden.

Bei einer weiteren vorteilhaften Weiterbildung erfolgt das Ermitteln dieser Zeitdauer in einer zentralen Steuereinheit der Fertigungsanlage. Dadurch können vorteilhafterweise mehrere Konfigurationen von Fertigungsanlagen mit unterschiedlichen Weiterverarbeitungsmaschinen berücksichtigt werden und für jede dieser Konfigurationen eine dezidierte Zeitdauer bestimmt und für zukünftige Anwendungen gespeichert werden.

In einer vorteilhaften Variante des erfindungsgemässen Verfahrens wird die Bedruckstoffbahn während des Umrüstens der Fertigungsanlage mit der unveränderten ersten Bahngeschwindigkeit transportiert und bedruckt. Dadurch kann die vorgeschaltete Digitaldruckmaschine in einem Regelbetrieb gefahren werden, bei dem keine Geschwindigkeitsabweichungen oder -änderungen zu berücksichtigen sind.

In einer alternativen Variante des erfindungsgemässen Verfahrens wird die Bedruckstoffbahn während des Umrüstens der Fertigungsanlage mit einer gegenüber der ersten Bahngeschwindigkeit verminderten zweiten Bahngeschwindigkeit transportiert und bedruckt. Dadurch kann beispielsweise ein aufwändigeres Wechseln der zugeführten Bedruckstoffbahn erfolgen, was nicht bei voller Verarbeitungsgeschwindigkeit möglich ist.

In einer Weiterbildung des erfindungsgemässen Verfahrens ist mindestens eine Weiterverarbeitungsmaschine der Fertigungsanlage eine Falzvorrichtung. Dabei erfolgt das Umrüsten der Fertigungsanlage durch Verstellen der Falzvorrichtung, wobei die Bedruckstoffbahn für aufeinanderfolgende Fertigungsaufträge nach einem unveränderten Falzschema gefalzt wird und wobei Druckprodukte mit einem unterschiedlichen Format hergestellt werden, indem die eine Bedruckstoffbahn quer zur Förderrichtung geschnitten und entsprechend des unveränderten Falzschemas gefalzt wird. Das Verstellen der Falzvorrichtung erfolgt hier lediglich minimal, z.B. um einen Überfalz zu erzeugen. Dies bietet eine weitere Möglichkeit der Formatvariabilität, wenn z.B. aufeinanderfolgende Druckprodukte zwar mit einem unterschiedlichen Format hergestellt werden, wozu aber kein Verstellen der Falzvorrichtung erforderlich ist. Alternativ kann in einem weiteren Ausführungsbeispiel auch ein Verstellen der Falzvorrichtung erfolgen, wenn nach einem veränderten Falzschema gefalzt werden soll. In einer Weiterbildung des erfindungsgemässen Verfahrens ist stromauf der Digitaldruckmaschine eine Zuführvorrichtung für die Bedruckstoffbahn angeordnet, wobei das Umrüsten der Fertigungsanlage ein während der Umrüstzeit erfolgendes Verstellen mindestens einer der Weiterverarbeitungsmaschinen und der Zuführvorrichtung und/oder der Digitaldruckmaschine umfasst. Bei der Ermittlung der Zeitdauer zum Verstellen der Weiterverarbeitungsmaschine, welche die längste Verstellzeit erfordert, wird auch die Verstellzeit der Zuführvorrichtung und/oder der Digitaldruckmaschine ermittelt und gegebenenfalls als längste Verstellzeit erfasst. Die mindestens eine zu verstellende Weiterverarbeitungsmaschine und die zu verstellende Zuführvorrichtung und/oder die zu verstellende Digitaldruckmaschine beginnt jeweils mit dem Verstellen, sobald das letzte Druckprodukt und/oder die Bedruckstoffbahn des vorangehenden Fertigungsauftrags diese Weiterverarbeitungsmaschine beziehungsweise die Zuführvorrichtung und/oder die Digitaldruckmaschine verlässt. Die mindestens eine zu verstellende Weiterverarbeitungsmaschine und die Zuführvorrichtung und/oder die Digitaldruckmaschine beginnt jeweils mit der Abarbeitung des nachfolgenden Fertigungsauftrags, sobald nach Beginn des Verstellens die ermittelte Zeitdauer zum Verstellen verstrichen ist. In dieser Weiterbildung des Verfahrens werden somit auch die Verstellzeiten weiterer Komponenten der Fertigungsanlage ermittelt, insbesondere der Zuführvorrichtung und/oder der Digitaldruckmaschine, um gegebenenfalls deren Auswirkung auf das Verfahren zu berücksichtigen.

Die Erfindung wird nachfolgend anhand von Zeichnungen näher erläutert. Es zeigen:
- Fig. 1: beispielhafte Konfigurationen mehrerer Fertigungsanlagen als Blockdia-gramm,
- Fig. 2: Verfahrensschritte nach dem Stand der Technik für das Verstellen einer als Falzvorrichtung ausgebildeten Weiterverarbeitungsmaschine und
- Fig. 3: erfindungsgemässe Verfahrensschritte für das Verstellen einer als Falzvor-richtung ausgebildeten Weiterverarbeitungsmaschine.

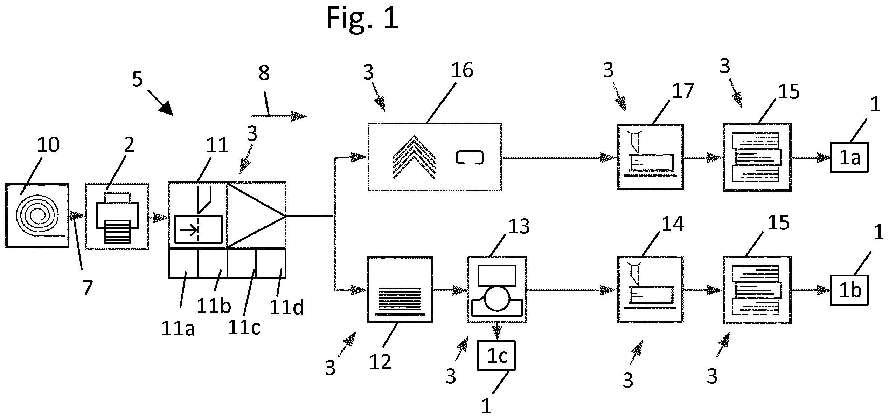

In Fig. 1 sind beispielhaft mehrere in einer gemeinsamen Darstellung zusammengefasste Konfigurationen mehrerer Fertigungsanlagen 5 zur Herstellung von Druckprodukten 1 als Blockdiagramm veranschaulicht. Die tatsächlich verwendete Konfiguration ist von den jeweils herzustellenden Druckprodukten 1 abhängig. Diese können beispielsweise Sammelheftprodukte 1a, Klebebindeprodukte 1b oder Stapel von Signaturen 1c sein, die entweder online oder offline weiterverarbeitet werden sollen. Alle Konfigurationen weisen eine Digitaldruckmaschine 2 auf, wobei in einer Förderrichtung 8 der Druckprodukte 1 stromauf der Digitaldruckmaschine 2 eine als Rollenwechsler ausgebildete Zuführvorrichtung 10 für eine Bedruckstoffbahn 7 und stromab der Digitaldruckmaschine 2 eine Weiterverarbeitungsmaschine 3, hier eine Falzvorrichtung 11 angeordnet ist. Dabei sind in der dargestellten Falzvorrichtung 11 vier Bearbeitungseinrichtungen nacheinander angeordnet: eine Trichterfalzeinrichtung 11a, eine Querschneideinrichtung 11b, eine Querfalzeinrichtung 11c und eine Längsfalzeinrichtung 11d.

Für die Fertigung von Sammelheftprodukten 1a sind stromab der Falzvorrichtung 11 zusätzlich folgende Weiterverarbeitungsmaschinen 3 angeordnet: ein Sammelhefter 16 eine Schneidvorrichtung 17 und eine Paketiervorrichtung 15.

Für eine zweite alternative Fertigung von Klebebindeprodukten 1b sind stromab der Falzvorrichtung 11 eine Zusammentragmaschine 12, ein Klebebinder 13, eine Schneidvorrichtung 14 und eine Paketiervorrichtung 15 angeordnet.

Für eine dritte alternative Fertigung eines Stapels von Signaturen 1c ist stromab der Falzvorrichtung 11 lediglich eine Zusammentragmaschine 12 angeordnet.

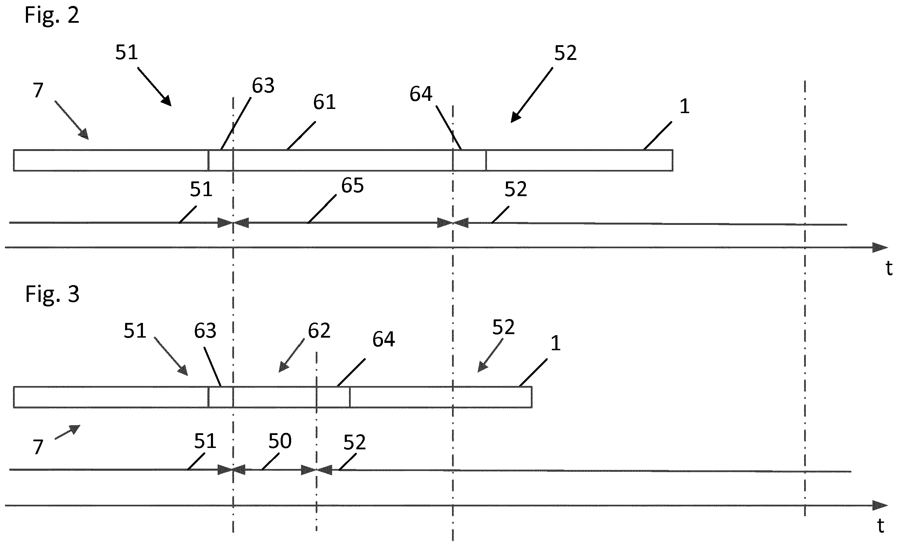

In Fig. 2 sind Verfahrensschritte bei einem Jobwechsel nacheinander folgender Fertigungsaufträge, d.h. von einem ersten Fertigungsauftrag 51 zu einem zweiten Fertigungsauftrag 52 für das Verstellen einer einzelnen Weiterverarbeitungsmaschine 3 einer Fertigungsanalage gemäss dem Stand der Technik schematisch entlang einer Zeitachse t dargestellt. Die Bedruckstoffbahn 7 weist symbolisch Druckprodukte 1 mit einem unterschiedlichen Format für den ersten Fertigungsauftrag 51 und für den zweiten Fertigungsauftrag 52 auf. Wird dabei festgestellt, dass die zur Verfügung stehende Zeit zum Verstellen der Weiterverarbeitungsmaschine 3 nicht ausreicht, erfolgt daraufhin das Einfügen zumindest eines Leertaktes 65. Nach dem Beenden des ersten Fertigungsauftrags 51 mit dem letzten Druckprodukt 63 dieses Fertigungsauftrags 51 entsteht während des zumindest einen Leertaktes 65 Makulatur 61, weil die Weiterverarbeitungsmaschine 3 gerade verstellt wird. Das erste gute Druckprodukt 64 des zweiten Fertigungsauftrags 52 kann erst nach Abschluss des Verstellvorgangs produziert werden.

In Fig. 3 sind die erfindungsgemässen Verfahrensschritte bei einem Jobwechsel von einem ersten Fertigungsauftrag 51 zu einem zweiten Fertigungsauftrag 52 mit einem dazwischenliegenden Blankojob 50 für das Verstellen der Weiterverarbeitungsmaschine 3 und/oder der Zuführvorrichtung 10 schematisch entlang der Zeitachse t dargestellt. Auch hier weist die Bedruckstoffbahn 7 symbolisch Druckprodukte 1 mit unterschiedlichen Formaten für den ersten Fertigungsauftrag 51 gegenüber Druckprodukten des zweiten Fertigungsauftrags 52 auf. Nach dem Beenden des ersten Fertigungsauftrags 51 mit dem letzten Druckprodukt 63 dieses Fertigungsauftrags 51 wird lediglich eine unbedruckte Bedruckstoffbahn 62 erzeugt, während die Weiterverarbeitungsmaschine 3 und/oder die Zuführvorrichtung 10 verstellt wird. Das erste gute Druckprodukt 64 des zweiten Fertigungsauftrags 52 kann demnach schneller als im Stand der Technik nach Abschluss des Verstellvorgangs produziert werden, weil hier nicht auf das Verstreichen von Leertakten 65 gewartet werden muss.

Bei diesem Verfahren wird zunächst eine Zeitdauer zum Verstellen der Weiterverarbeitungsmaschine 3 ermittelt, welche die längste Verstellzeit erfordert, die dem Blankojob 50 entspricht. Die mindestens eine zu verstellende Weiterverarbeitungsmaschine 3 beginnt daraufhin mit dem Verstellen, sobald das letzte Druckprodukt 1 des vorangehenden Fertigungsauftrags 51 diese Weiterverarbeitungsmaschine 3 verlässt. Die mindestens eine zu verstellende Weiterverarbeitungsmaschine 3 beginnt mit der Abarbeitung des nachfolgenden Fertigungsauftrags 52, sobald nach Beginn des Verstellens die ermittelte Zeitdauer zum Verstellen der Weiterverarbeitungsmaschine 3, welche die längste Verstellzeit erfordert, verstrichen ist.

Beim Ermitteln der Zeitdauer für den Blankojob 50 in einer zentralen Steuereinheit der Fertigungsanlage können mehrere Konfigurationen von Fertigungsanlagen mit unterschiedlichen Weiterverarbeitungsmaschinen und/oder Zuführvorrichtungen berücksichtigt werden und für jede dieser Konfigurationen kann demnach eine dezidierte Zeitdauer bestimmt und für zukünftige Anwendungen gespeichert werden.

Gemäss dem Blockdiagramm der Fig. 1 existieren unterschiedliche Konfigurationen von Fertigungsanlagen 5. Wenn die in der jeweiligen Fertigungsanlage 5 nacheinander zu produzierenden Sammelheftprodukte 1a, Klebebindeprodukte 1b oder Stapel von Signaturen 1c unterschiedliche Formate aufweisen sollen, muss für zwei aufeinanderfolgende Fertigungsaufträge 51, 52 zumindest eine der Weiterverarbeitungsmaschinen 3 und/oder die Zuführvorrichtung 10 der Fertigungsanlage 5 verstellt werden.

In einem ersten Beispiel zum Betrieb der Fertigungsanlage 5 zur Herstellung von Sammelheftprodukte 1a, Klebebindeprodukte 1b oder Stapel von Signaturen 1c sollen die Druckprodukte aufeinanderfolgender Fertigungsaufträge 51, 52 unterschiedliche Abschnittlängen aufweisen. Dazu ist folgende Umrüstung der Fertigungsanlage 5 vorzunehmen:
- An der Zuführvorrichtung 10: Es erfolgt keine Verstellen.
- An der Digitaldruckmaschine 2: Es erfolgt kein Verstellen.
- An der Trichterfalzeinrichtung 11a: Es erfolgt kein Verstellen.
- An der Querschneideinrichtung 11b: Im ersten Schritt wird ein Messerzylinder auf das neue Format verstellt, wobei eine kleinere Abschnittlänge eine schnellere Rotationsbewegung des Messerzylinders gegenüber der Bedruckstoffbahn 7 erfordert. Im zweiten Schritt wird ein Schnittwinkel auf das neue Format verstellt.
- An der Querfalzeinrichtung 11c: Ein Falzschwert wird auf die neue Abschnittlänge verstellt. Je kleiner die Abschnittlänge, desto schneller muss die Rotationsbewegung gegenüber der Bedruckstoffbahn 7 sein.
- An der Längsfalzeinrichtung 11d: 1. Ein Falzschwert wird auf die neue Abschnittlänge verstellt, wobei eine kleiner Abschnittlänge eine schnellere Rotationsbewegung des Falzschwerts gegenüber der Bedruckstoffbahn 7 erfordert. 2. Ein Bogenanschlag und eine Falzformathöhe werden auf die neue Abschnittlänge verstellt.

In einem zweiten Beispiel zum Betrieb der Fertigungsanlage 5 sollen die Druckprodukte aufeinander folgender Fertigungsaufträge 51, 52 unterschiedliche Längsfalzpositionen und Bedruckstoffe aufweisen. In diesem Fall wird die Fertigungsanlage 5 wie folgt umgerüstet:
- Zuführvorrichtung 10: Bei Verwendung eines andern Bedruckstoffs wird die Bedruckstoffrolle gewechselt. Die bisher verwendete Bedruckstoffbahn 7 wird aufgetrennt und eine neue Bedruckstoffbahn 7 wird ans Ende der alten angeklebt. Die Sensoren für die Bahnkantenregelung werden dabei auf die Breite der neuen Bedruckstoffbahn 7 verfahren.
- Digitaldruckmaschine 2: Die Sensoren für die Bahnkantenregelung werden dabei auf die Breite der neuen Bedruckstoffbahn 7 verfahren.
- Trichterfalzeinrichtung 11a: die Trichterpositionen, die Wendestangen und die Längenausgleiche werden aufgrund der Breite der neuen Bedruckstoffbahn 7 und dem Falzschema berechnet und entsprechend synchron zur Geschwindigkeit dieser Bedruckstoffbahn 7 verstellt.
- Querschneideinrichtung 11b: Es erfolgt kein Verstellen.
- Querfalzeinrichtung 11c: Bei einer Änderung der Dicke der Bedruckstoffbahn 7 oder dem neuen Falzschema werden die Falzwalzen auf die neue Bogendicke umgestellt.
- Längsfalzeinrichtung 11d: Bei einer Änderung der Dicke der Bedruckstoffbahn 7 oder dem neuen Falzschema werden die Falzwalzen auf die neue Bogendicke umgestellt. Bei einer Änderung des Falzschemas, d.h. bei einer neuen Bogenbreite wird die Falzformathöhe umgestellt.
- Die weiteren Weiterverarbeitungsmaschinen 3 der Fertigungsanlage 5 werden je nach Bedarf ebenfalls verstellt.

Natürlich kann auch eine gegebenenfalls erforderliche Verstellung der Zuführvorrichtung 10 und/oder der Digitaldruckmaschine 2 in das Verfahren einbezogen werden.

## Patentansprüche

1. Verfahren zur Herstellung von Druckprodukten (1) auf einer mit einer Digitaldruckmaschine (2) und mindestens einer stromab der Digitaldruckmaschine (2) angeordneten Weiterverarbeitungsmaschine (3) ausgestatteten Fertigungsanlage (5), wobei die Herstellung der Druckprodukte (1) nach Fertigungsaufträgen (51, 52) erfolgt, zu deren Abarbeitung die Digitaldruckmaschine (2) eine in einer Förderrichtung (8) mit einer ersten Bahngeschwindigkeit transportierte Bedruckstoffbahn (7) mit Druckbildern und prozesstechnischen Elementen bedruckt und die mindestens eine Weiterverarbeitungsmaschine (3) die Bedruckstoffbahn (7) zu Druckprodukten (1) weiterverarbeitet, wobei die Fertigungsanlage (5) umgerüstet wird, wenn mit einem nachfolgenden Fertigungsauftrag (52) gegenüber einem vorangehenden Fertigungsauftrag (51) unterschiedliche Druckprodukte (1) hergestellt werden sollen, wobei das Umrüsten ein während einer Umrüstzeit erfolgendes Verstellen mindestens einer der Weiterverarbeitungsmaschinen (3) umfasst, und wobei die Bedruckstoffbahn (7) während des Umrüstens weiter durch die Digitaldruckmaschine (2) transportiert wird, **dadurch gekennzeichnet, dass**
- zunächst eine Zeitdauer zum Verstellen der Weiterverarbeitungsmaschine (3) ermittelt wird, welche die längste Verstellzeit erfordert,
- die mindestens eine zu verstellende Weiterverarbeitungsmaschine (3) mit dem Verstellen beginnt, sobald das letzte Druckprodukt (1) des vorangehenden Fertigungsauftrags (51) diese Weiterverarbeitungsmaschine (3) verlässt,
- die mindestens eine zu verstellende Weiterverarbeitungsmaschine (3) mit der Abarbeitung des nachfolgenden Fertigungsauftrags (52) beginnt, sobald nach Beginn des Verstellens die ermittelte Zeitdauer zum Verstellen der Weiterverarbeitungsmaschine (3), welche die längste Verstellzeit erfordert, verstrichen ist,
- und die Digitaldruckmaschine (2) die Bedruckstoffbahn (7) während des Umrüstens der Fertigungsanlage (5) für die ermittelte Zeitdauer nur mit prozesstechnischen Elementen bedruckt oder lediglich eine unbedruckte Bedruckstoffbahn (62) erzeugt wird.

2. Verfahren nach einem Anspruch 1, **dadurch gekennzeichnet, dass** das Ermitteln der Zeitdauer in einer zentralen Steuereinheit der Fertigungsanlage (5) erfolgt.

3. Verfahren nach einem der Ansprüche 1 oder 2, **dadurch gekennzeichnet, dass** die Bedruckstoffbahn (7) während des Umrüstens der Fertigungsanlage (5) mit der unveränderten ersten Bahngeschwindigkeit transportiert und bedruckt wird.

4. Verfahren nach einem der Ansprüche 1 oder 2, **dadurch gekennzeichnet, dass** die Bedruckstoffbahn (7) während des Umrüstens der Fertigungsanlage (5) mit einer gegenüber der ersten Bahngeschwindigkeit verminderten, zweiten Bahngeschwindigkeit transportiert und bedruckt wird.

5. Verfahren nach einem der Ansprüche 1 bis 4, **dadurch gekennzeichnet, dass** mindestens eine Weiterverarbeitungsmaschine (3) der Fertigungsanlage (5) eine Falzvorrichtung (11) ist, wobei das Umrüsten der Fertigungsanlage (5) durch Verstellen der Falzvorrichtung (11) erfolgt, wobei die Bedruckstoffbahn (7) für aufeinanderfolgende Fertigungsaufträge (51, 52) nach einem unveränderten Falzschema gefalzt wird und wobei Druckprodukte (1) mit einem unterschiedlichen Format hergestellt werden, indem die Bedruckstoffbahn (7) quer zur Förderrichtung (8) geschnitten und entsprechend des unveränderten Falzschemas gefalzt wird.

6. Verfahren nach einem der Ansprüche 1 bis 4, **dadurch gekennzeichnet, dass** die mindestens eine Weiterverarbeitungsmaschine (3) der Fertigungsanlage (5) eine Falzvorrichtung (11) ist, wobei das Umrüsten der Fertigungsanlage (5) durch Verstellen der Falzvorrichtung (11) erfolgt, wobei die Bedruckstoffbahn (7) für aufeinanderfolgende Fertigungsaufträge (51, 52) nach einem veränderten Falzschema gefalzt wird und wobei Druckprodukte (1) unterschiedlichen Format hergestellt werden, indem die Bedruckstoffbahn (7) quer zur Förderrichtung (8) geschnitten und entsprechend des veränderten Falzschemas gefalzt wird.

7. Verfahren nach einem der Ansprüche 1 bis 6, **dadurch gekennzeichnet, dass** stromauf der Digitaldruckmaschine (2) eine Zuführvorrichtung (10) für die Bedruckstoffbahn (7) angeordnet ist, wobei das Umrüsten der Fertigungsanlage (5) ein während der Umrüstzeit erfolgendes Verstellen mindestens einer der Weiterverarbeitungsmaschinen (3) und der Zuführvorrichtung (10) und/oder der Digitaldruckmaschine (2) umfasst, wobei
- bei der Ermittlung der Zeitdauer zum Verstellen der Weiterverarbeitungsmaschine (3), welche die längste Verstellzeit erfordert, auch die Verstellzeit der Zuführvorrichtung (10) und/oder der Digitaldruckmaschine (2) ermittelt und gegebenenfalls als längste Verstellzeit erfasst wird,
- die mindestens eine zu verstellende Weiterverarbeitungsmaschine (3) und die zu verstellende Zuführvorrichtung (10) und/oder die zu verstellende Digitaldruckmaschine (2) jeweils mit dem Verstellen beginnt, sobald das letzte Druckprodukt (1) und/oder die Bedruckstoffbahn (7) des vorangehenden Fertigungsauftrags (51) diese Weiterverarbeitungsmaschine (3) beziehungsweise die Zuführvorrichtung (10) und/oder die Digitaldruckmaschine (2) verlässt,
- die mindestens eine zu verstellende Weiterverarbeitungsmaschine (3) und die Zuführvorrichtung (10) und/oder die Digitaldruckmaschine (2) jeweils mit der Abarbeitung des nachfolgenden Fertigungsauftrags (52) beginnt, sobald nach Beginn des Verstellens die ermittelte Zeitdauer zum Verstellen verstrichen ist.

8. Verfahren nach einem der Ansprüche 1 bis 7, **dadurch gekennzeichnet, dass** die Digitaldruckmaschine (2) die Bedruckstoffbahn (7) zur Abarbeitung der Fertigungsaufträge (51, 52) sequentiell mit Druckbildern und prozesstechnischen Elementen bedruckt.

## Claims

1. Method for manufacturing printed products (1) on a production system (5) equipped with a digital printing press (2) and at least one further processing machine (3) arranged downstream of the digital printing press (2), wherein the printed products (1) are manufactured in accordance with production orders (51, 52), in order to process which, the digital printing press (2) prints a printing material web (7) transported in a conveying direction (8) at a first web speed with printing images and process-technical elements, and the at least one further processing machine (3) processes the printing material web (7) further to form printed products (1), wherein the production system (5) is converted when different printed products (1) are to be manufactured with a following production order (52) as compared with a preceding production order (51), wherein the conversion comprises adjustment of at least one of the further processing machines (3), carried out during a conversion time, and wherein the printing material web (7) continues to be transported through the digital printing press (2) during the conversion, **characterized in that**
- firstly a time period for the adjustment of the further processing machine (3) which requires the longest adjustment time is determined,
- the at least one further processing machine (3) to be adjusted begins the adjustment as soon as the last printed product (1) of the preceding production order (51) leaves this further processing machine (3),
- the at least one further processing machine (3) to be adjusted begins processing the following production order (52) as soon as the time period determined for the adjustment of the further processing machine (3) which requires the longest adjustment time has elapsed following the start of the adjustment,
- and for the time period determined, during the conversion of the production system (5), the digital printing machine (2) prints the printing material web (7) only with process-technical elements or only an unprinted printing material web (62) is produced.

2. Method according to Claim 1, **characterized in that** the time period is determined in a central control unit of the production system (5).

3. Method according to either of Claims 1 or 2, **characterized in that** during the conversion of the production system (5), the printing material web (7) is transported and printed at the unchanged first web speed.

4. Method according to either of Claims 1 or 2, **characterized in that** during the conversion of the production system (5), the printing material web (7) is transported and printed at a second web speed, reduced as compared with the first web speed.

5. Method according to one of Claims 1 to 4, **characterized in that** at least one further processing machine (3) of the production system (5) is a folding device (11), wherein the conversion of the production system (5) is carried out by adjusting the folding device (11), wherein the printing material web (7) is folded in accordance with an unchanged folding scheme for successive production orders (51, 52), and wherein printed products (1) are manufactured with a different format by the printing material web (7) being cut transversely with respect to the conveying direction (8) and being folded in accordance with the unchanged folding scheme.

6. Method according to one of Claims 1 to 4, **characterized in that** the at least one further processing machine (3) of the production system (5) is a folding device (11), wherein the conversion of the production system (5) is carried out by adjusting the folding device (11), wherein the printing material web (7) is folded in accordance with a changed folding scheme for successive production orders (51, 52) and wherein printed products (1) are manufactured with a different format by the printing material web (7) being cut transversely with respect to the conveying direction (8) and being folded in accordance with the changed folding scheme.

7. Method according to one of Claims 1 to 6, **characterized in that** a feed device (10) for the printing material web (7) is arranged upstream of the digital printing press (2), wherein the conversion of the production system (5) comprises adjustment of at least one of the further processing machines (3) and the feed device (10) and/or the digital printing press (2), carried out during the conversion time, wherein
- during the determination of the time period for adjusting the further processing machine (3) which requires the longest adjustment time, the adjustment time of the feed device (10) and/or the digital printing press (2) are also determined and, if appropriate, detected as the longest adjustment time,
- the at least one further processing machine (3) to be adjusted and the feed device (10) to be adjusted and/or the digital printing press (2) to be adjusted each begin the adjustment as soon as the last printed product (1) and/or the printing material web (7) of the preceding production order (51) leaves this further processing machine (3) or the feed device (10) and/or the digital printing press (2),
- the at least one further processing machine (3) to be adjusted and the feed device (10) and/or the digital printing press (2) each begin processing the following production order (52) as soon as the time period for the adjustment has elapsed following the start of the adjustment.

8. Method according to one of Claims 1 to 7, **characterized in that** to process the production orders (51, 52), the digital printing press (2) prints the printing material web (7) sequentially with printing images and process-technical elements.

## Revendications

1. Procédé de fabrication de produits d'impression (1) sur une installation de production (5) équipée d'une imprimante numérique (2) et d'au moins une machine de traitement ultérieur (3) disposée en aval de l'imprimante numérique (2), la fabrication des produits d'impression (1) étant réalisée en fonction des commandes de fabrication (51, 52) pour le traitement desquelles l'imprimante numérique (2) imprime une bande d'impression (7) transportée dans une direction de transport (8) à une première vitesse de bande avec des images imprimées et des éléments techniques de traitement et pour laquelle l'au moins une machine de traitement ultérieur (3) traite ensuite la bande d'impression (7) pour en faire des produits d'impression (1), l'installation de production (5) étant réorganisée lorsque les différents produits d'impression (1) doivent être fabriqués pour une commande de production (52) suivante après une commande de production (51) précédente, le traitement ultérieur comprend un réglage d'au moins une des machines de traitement ultérieur (3) se produisant pendant un temps de réorganisation et la bande d'impression (7) continuant d'être transportée par l'imprimante numérique (2) pendant la réorganisation ;
**caractérisé en ce que** :
- une durée de réglage de la machine de traitement ultérieur (3) est d'abord calculée, cette durée exigeant la durée de réglage la plus longue ;
- l'au moins une machine de traitement ultérieur (3) à régler commençant le réglage dès que le dernier produit d'impression (1) de la commande de production (51) précédente quitte cette machine de traitement ultérieur (3) ;
- l'au moins une machine de traitement ultérieur (3) à régler commençant le traitement de la commande de production (52) suivante dès, après le début du réglage, écoulement de la durée calculée pour le réglage de la machine de traitement ultérieur (3) nécessitant la durée de réglage la plus longue ; et
- l'imprimante numérique (2) n'imprime la bande d'impression (7) pendant la réorganisation de l'installation de production (5) pendant la durée calculée qu'avec les éléments techniques de traitement ou ne produit qu'une bande d'impression (62) non imprimée.

2. Procédé selon la revendication 1, **caractérisé en ce que** le calcul de la durée est réalisé dans une unité de commande centrale de l'installation de production (5) .

3. Procédé selon l'une quelconque des revendications 1 ou 2, **caractérisé en ce que** la bande d'impression (7) est transportée et imprimée à une première vitesse de bande inchangée pendant la réorganisation de l'installation de production (5).

4. Procédé selon l'une quelconque des revendications 1 ou 2, **caractérisé en ce que** la bande d'impression (7) est transportée et imprimée à une deuxième vitesse de bande inférieure à la première vitesse de bande pendant la réorganisation de l'installation de production (5).

5. Procédé selon l'une quelconque des revendications 1 à 4, **caractérisé en ce qu'**au moins une machine de traitement ultérieur (3) de l'installation de production (5) est un dispositif de pliage (11), la réorganisation de l'installation de production (5) étant réalisée par réglage du dispositif de pliage (11), la bande d'impression (7) étant pliée pour les commandes de fabrication (51, 52) successives d'après un schéma de pliage inchangé et les produits d'impression (1) étant fabriqués à un format différent en coupant la bande d'impression (7) transversalement à la direction de transport (8) et en la pliant suivant le schéma de pliage inchangé.

6. Procédé selon l'une quelconque des revendications 1 à 4, **caractérisé en ce que** l' au moins une machine de traitement ultérieur (3) de l'installation de production (5) est un dispositif de pliage (11), la réorganisation de l'installation de production (5) étant réalisée par réglage du dispositif de pliage (11), la bande d'impression (7) étant pliée d'après un schéma de pliage modifié pour les commandes de fabrication (51, 52) successives et des produits d'impression (1) de différents formats étant fabriqués en coupant la bande d'impression (7) transversalement à la direction de transport (8) et en la pliant suivant le schéma de pliage modifié.

7. Procédé selon l'une quelconque des revendications 1 à 6, **caractérisé en ce qu'**un dispositif d'amenée (10) de la bande d'impression (7) est disposé en amont de l'imprimante numérique (2), la réorganisation de l'installation de production (5) comprenant un réglage d'au moins une des machines de traitement ultérieur (3) et du dispositif d'amenée (10) et/ou de l'imprimante numérique (2) réalisé pendant le temps de réorganisation ;
- lors du calcul de la durée de réglage de la machine de traitement ultérieur (3) nécessitant la durée de réglage la plus longue, la durée de réglage du dispositif d'amenée (10) et/ou de l'imprimante numérique (2) est également calculée et le cas échéant déterminée comme étant la durée de réglage la plus longue ;
- l'au moins une machine de traitement ultérieur (3) à régler et le dispositif d'amenée (10) à régler et/ou l'imprimante numérique (2) à régler commence respectivement le réglage dès que le dernier produit d'impression (1) et/ou la bande d'impression (7) de la commande de production (51) précédente quitte cette machine de traitement ultérieur (3) et/ou le dispositif d'amenée (10) et/ou l'imprimante numérique (2) ;
- l'au moins une machine de traitement ultérieur (3) à régler et le dispositif d'amenée (10) et/ou l'imprimante numérique (2) commence respectivement le traitement de la commande de production (52) suivante dès, après le début du réglage, écoulement de la durée calculée pour le réglage.

8. Procédé selon l'une quelconque des revendications 1 à 7, **caractérisé en ce que** l'imprimante numérique (2) imprime séquentiellement la bande d'impression (7) pour le traitement des commandes de fabrication (51, 52) avec des images imprimées et des éléments techniques de traitement.
